# EUROPÄISCHE PATENTSCHRIFT

(11) **EP 2 936 103 B1**
(45) Veröffentlichungstag und Bekanntmachung des Hinweises auf die Patenterteilung: **27.02.2019**
(21) Anmeldenummer: 13802350.2
(22) Anmeldetag: 06.12.2013
(51) Int. Cl.: G01L 19/06, G01L 13/02

(54) **MECHANISCHE STABILISIERUNG UND ELEKTRISCHE SOWIE HYDRAULISCHE ADAPTIERUNG EINES SILIZIUM CHIPS DURCH KERAMIKEN**
MECHANICAL STABILIZATION AND ELECTRICAL AND HYDRAULIC ADAPTATION OF A SILICON CHIP BY CERAMICS
STABILISATION MÉCANIQUE ET ADAPTATION ÉLECTRIQUE AINSI QU'HYDRAULIQUE D'UNE PUCE DE SILICIUM PAR DES CÉRAMIQUES

(30) Priorität: 21.12.2012 DE 102012113033
(43) Veröffentlichungstag der Anmeldung: 28.10.2015
(73) Patentinhaber: Endress+Hauser SE+Co. KG, 79689 Maulburg (DE)
(72) Erfinder: LEMKE, Benjamin, 12051 Berlin (DE); TEIPEN, Rafael, 10407 Berlin (DE); THAM, Anh Tuan, 14089 Berlin (DE)
(74) Vertreter: Andres, Angelika Maria
(86) Internationale Anmeldenummer: PCT/EP2013/075764
(87) Internationale Veröffentlichungsnummer: WO 2014/095416

(56) Entgegenhaltungen:
- DE-A1- 2 718 873
- DE-A1-102004 017 580

## Beschreibung

Die vorliegende Erfindung betrifft einen Differenzdrucksensor, insbesondere einen Differenzdrucksensor mit einer mikromechansichen Differenzdruckmesszelle, welche einen Halbleiterwerkstoff, insbesondere Silizium aufweist. Differenzdruckmesszellen sind empfindlich gegen Überlasten aufgrund hoher statische Drücke. Ansätze zum Schutz von Differenzdruckmesszellen gegen die Auswirkungen solcher Überlasten sind in der Offenlegungsschrift DE 10 2011 006 517 A1 und den darin zitierten Dokumenten zum Stand der Technik offenbart. In der genannten Offenlegungsschrift ist eine zweiteilige keramische Kapsel beschrieben, welche eine Differenzdruckmesszelle vollständig umschließt, um die Differenzdruckmesszelle im Überlastfall zu schützen. Diese Konstruktion ist jedoch ist jedoch sehr aufwendig, da das System bestehend aus Kapsel und Differenzdruckmesszelle überbestimmt ist. Eine Kavität in der Kapsel, in welcher die Differenzdruckmesszelle angeordnet ist, muss eine hinreichend genau definierte Tiefe aufweisen, die an die Stärke der Differenzdruckmesszelle angepasst ist, um die Differenzdruckmesszelle wirksam abstützen zu können. Hierbei sind selbstverständlich auch die Schichtstärken der Fügematerialien zu berücksichtigen, mit denen die Differenzdruckmesszelle in der Kapsel gehalten ist. Als Fügematerial kommt insbesondere ein Glaslot in Betracht. Wie gesagt, ist der beschriebene Ansatz grundsätzlich tragfähig, jedoch ist er mit hohen Kosten verbunden um die geringen Fertigungstoleranzen einhalten zu können.

Es ist daher die Aufgabe der vorliegenden Erfindung, hier Abhilfe zu schaffen, und einen Differenzdrucksensor mit einem wirksamen und kostengünstigeren Schutz der Differenzdruckmesszelle bereitzustellen.

Die Aufgabe wird erfindungsgemäß gelöst durch den Differenzdrucksensor gemäß dem unabhängigen Patentanspruch 1.

Der erfindungsgemäße Differenzdrucksensor umfasst:
eine Differenzdruckmesszelle,
wobei die Differenzdruckmesszelle einen Messzellenkörper mit einer ersten Messkammer und einer zweiten Messkammer in seinem Innern aufweist, wobei die Messkammern durch eine Messmembran voneinander getrennt sind,
wobei der Messzellenkörper auf der Seite der ersten Messkammer eine der Messmembran abgewandte, erste ebene Montagefläche aufweist,
wobei der Messzellenkörper auf der Seite der zweiten Messkammer eine der Messmembran abgewandte, zweite ebene Montagefläche aufweist,
wobei die Messkammern jeweils eine Messkammeröffnung zur ersten bzw. zweiten ebenen Montagefläche aufweisen, über die Sie mit einem ersten bzw. zweiten Druck beaufschlagbar sind,
wobei die Messmembran in Abhängigkeit von einer Differenz zwischen dem ersten Druck in der ersten Messkammer und dem zweiten Druck in der zweiten Messkammer elastisch verformbar ist,
wobei die Differenzdruckmesszelle einen Wandler aufweist, zum Bereitstellen eines von der Verformung der Messmembran abhängigen Signals,
einen ersten Versteifungskörper mit einer ersten ebenen Versteifungsfläche, wobei durch den ersten Versteifungskörper ein erster Druckkanal verläuft, der in der ersten Versteifungsfläche mündet, und mit der ersten Messkammeröffnung kommuniziert, wobei die erste Versteifungsfläche mit der ersten Montagefläche drucktragend verbunden ist,
einen zweiten Versteifungskörper mit einer zweiten ebenen Versteifungsfläche, wobei durch den zweiten Versteifungskörper ein zweiter Druckkanal verläuft, der in der zweiten Versteifungsfläche mündet, und mit der zweiten Messkammeröffnung kommuniziert, wobei die zweite Versteifungsfläche mit der zweiten Montagefläche drucktragend verbunden ist,
wobei eine Durchbiegung der ersten und zweiten Montagefläche aufgrund eine Druckbeaufschlagung der ersten und zweiten Messkammer durch die Versteifungskörper verringert wird auf nicht mehr als 25% insbesondere nicht mehr als 10%, vorzugsweise nicht mehr als 5%, weiter bevorzugt nicht mehr als 2% und besonders bevorzugt nicht mehr als 1 % der Durchbiegung der Montageflächen einer Differenzdruckmesszelle gleichen Typs ohne Verbindung mit den Versteifungskörpern,
wobei insbesondere mindestens 50%, bevorzugt mindesten 70%, weiter bevorzugt mindestens 85% und besonders bevorzugt mindestens 95% einer effektiven Steifigkeit K= 1/(dx/dp) der durch die Differenzdruckmesszelle verbundenen Versteifungskörper, nur durch diese Verbindung der Versteifungskörper mit dem Messzellenkörper ohne zusätzliche Verbindungen zwischen den Versteifungskörpern in einem Nebenschluss gegeben ist, wobei x der Abstand zwischen der ersten Montagefläche und der zweiten Montageflächen ist, der die größte Druckabhängigkeit dx/dp aufweist.

Durch die Versteifung des Messzellenkörpers wird eine Druckfestigkeit der Differenzdruckmesszelle bei Belastungen einigen 10 MPa, insbesondere mehr als 60 MPa gewährleistet. Die Versteifungskörper weisen hierzu einen Werkstoff mit einem hohen E-Modul von mehr als 250 GPa, insbesondere mehr als 300 GPa auf..

Der erfindungsgemäße Differenzdrucksensor ist deutlich toleranter gegenüber Variationen der Maße der verwendeten Teile, als dies bei der Kapselung nach dem Stand der Technik der Fall war.

In einer Weiterbildung der Erfindung ist der Differenzdrucksensor frei von zusätzlichen, direkten mechanischen Verbindungen zwischen den Versteifungskörpern, mehr als 5%, insbesondere mehr als 2% zur Steifigkeit K beitragen. D.h., der Verband Versteifungskörper-Messzellenkörper-Versteifungskörper ist so stabil gestaltet, das auf zusätzliche Versteifungen verzichtet werden kann. Damit sind sämtliche Probleme einer mechanischen Überbestimmung der Lagerung der Differenzdruckmesszelle eliminiert.

In einer Weiterbildung der Erfindung weist der Differenzdrucksensor zusätzlichen, mindestens eine zusätzliche, direkte mechanische Verbindung zwischen den Versteifungskörpern mittels eines Verbindungskörpers auf, der eine Verbindungsfläche aufweist, die mit beiden Versteifungskörpern verbunden ist, wobei die Verbindungsfläche im wesentlichen senkrecht zu den Montageflächen und Versteifungsflächen steht. Die beschriebene direkte mechanische Verbindung kann durch Fügen der Verbindungsfläche des Verbindungskörpers mit Seitenflächen der Versteifungskörper erfolgen. Hierdurch ist das Problem der Maßgenauigkeit bei der Vorbereitung der beteiligten Komponenten weitgehend entschärft, denn diese Verbindung wirkt letztlich über Tangential bzw. Scherkräfte zwischen den beteiligten Flächen, so dass eine Anpassung an die durch die Differenzdruckmesszelle und die Verbindungskörper vorgegebenen Dimensionen ohne weiteres möglich ist.

Sofern zusätzliche direkte Verbindungen zwischen den Verbindungskörpern vorgesehen sind, wirken vorzugsweise symmetrisch, bezogen auf eine Mittenachse der Differenzdruckmesszelle, wobei die Mittenachse senkrecht auf der Messmembran steht und durch deren Zentrum verläuft. Daher weist der Differenzdrucksensor gemäß einer Weiterbildung der Erfindung vorzugsweise zwei Verbindungskörper auf, welche an gegenüberliegenden Seitenflächen der Versteifungskörper mit diesen verbunden sind.

In einer Weiterbildung der Erfindung weist die Differenzdruckmesszelle, insbesondere der Messzellenkörper Silizium auf.

In einer Weiterbildung der Erfindung weisen die Versteifungskörper einen Keramischen Werkstoff auf, insbesondere wie Aluminiumnitrid (AlN) und Siliziumnitrid (Si₃N₄) auf, oder andere Nitridkeramiken, deren Ausdehnungskoeffizient nicht mehr als etwa 5 ppm/K, betragen. Je geringer die Abweichung des Wärmeausdehnungskoeffizienten des Werkstoffs des Versteifungskörpers von jenem des Messzellenkörpers, insbesondere Silizium, abweicht.

Gemäß einer Weitwerbildung der Erfindung sind die Versteifungskörper mittels eines Glaslots mit dem Messzellenkörper gefügt.

In einer Weiterbildung weisen die Versteifungskörper jeweils eine Druckrohranschlussfläche auf, die im wesentlichen senkrecht zur Versteifungsfläche verläuft, wobei sich der Druckkanal von der Druckrohranschlussfläche zur Versteifungsfläche erstreckt.

In einer Weiterbildung der Erfindung sind die Versteifungskörper jeweils mit einem Druckrohr verbunden, das seinerseits an ein hydraulisches Messwerk angeschlossen ist, wobei der Beitrag der Druckrohre zur effektiven Steifigkeit K weniger als 2% von K, insbesondere weniger als 1 % von K und besonders bevorzugt weniger als 0,1 % von K beträgt. Hierbei verläuft die Längsachse der insbesondere geraden Druckrohre vorzugsweise senkrecht zur Mittenachse der Differenzdruckmesszelle.

Gemäß einer Weiterbildung der Erfindung sind die Versteifungskörper mittels eines Glaslots, eines metallischen Lots oder Kleber mit den Druckrohren verbunden.

In einer Weiterbildung der Erfindung ist weisen die Versteifungskörper zumindest abschnittsweise eine elektrisch leitende Beschichtung auf, beispielsweise in Form von Leiterbahnen, über welche ein elektrischer Wandler der Differenzdruckmesszelle mit einer elektronischen Schaltung verbunden ist. Der Wandler kann insbesondere einen kapazitiven Wandler und/oder einen (piezo-)resistiven Wandler umfassen. Die elektrische Verbindung zwischen den Leiterbahnen und dem Wandler kann insbesondere durch Leitkleber hergestellt werden.

Die Erfindung wird nun anhand des in den Zeichnungen dargestellten Ausführungsbeispiels erläutert.

Es zeigt:
Fig. 1: einen schematischen Längsschnitt durch ein erstes Ausführungsbeispiel eines erfindungsgemäßen Differenzdrucksensors; und
Fig. 2: einen schematischen Längsschnitt durch eine Differenzdruckmesszelle und Versteifungskörper eines Ausführungsbeispiels eines erfindungsgemäßen Differenzdrucksensors.

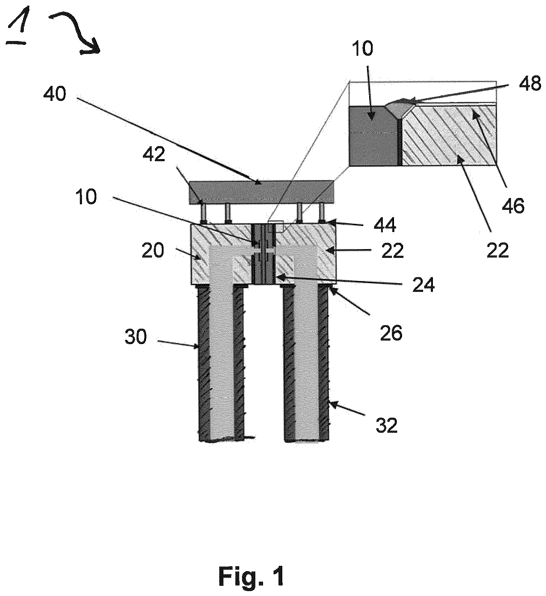

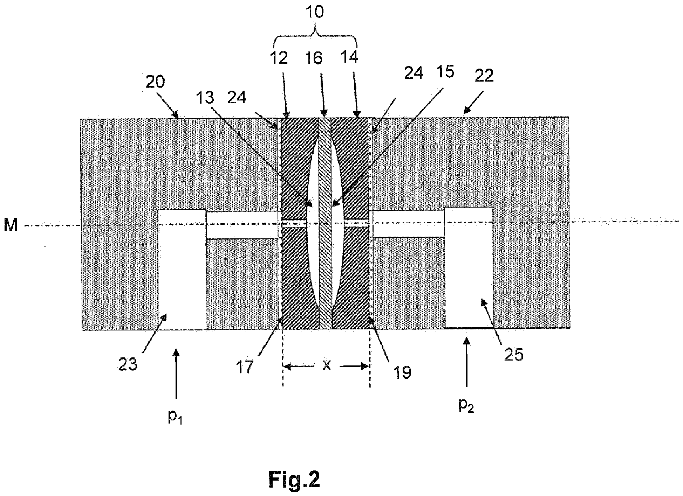

Der in Fign. 1 und 2 dargestellte Differenzdrucksensor 1 umfasst eine Differenzdruckmesszelle 10 aus Silizium mit einem kapazitiven Wandler. Die Differenzdruckmesszelle 10 umfasst einen Messzellenkörper der einen ersten Teilkörper 12 und einen zweiten Teilkörper 14 aufweist, zwischen denen eine Messmembran 16 angeordnet ist. Die Messmembran weist eine Stärke von beispielsweise einigen 10 µm bis 100 µm auf. Die Stärke der Gegenkörper beträgt beispielsweise einige 100 µm. Die Gegenkörper weisen eine Fläche parallel zur Messemembran in der Größenordnung von beispielsweise 20 bis 30 Quadratmillimeter auf.

Die Messmembran 16 ist mit den Gegenkörpern 12, 14 beispielsweise durch Fusion-Bonding gefügt. Im Messbetrieb wird die Differenzdruckmesszelle 10 mit einem ersten Druck p1 und einem Druck p2 beaufschlagt, wobei diese Drücke jeweils einer Messkammer 13, 15 zugeführt wird, die zwischen der Messmembran 16 und dem Gegenkörpern 12, 14 gebildet sind. Bestimmungsgemäß führt dies zur Auslenkung der Messmembran 16 in Abhängigkeit von der zu bestimmenden Druckdifferenz p1-p2. Bei großen Drücken kann dies aber zum Aufblähen der Messkammern 13, 15 führen, so dass ein Abstand X zwischen Montageflächen an voneinander abgewandten Montageflächen 18, 19 an den Außenseiten der Gegenkörper 12, 14 ohne Gegenmaßnahmen mit steigendem Druck ansteigen würde. Der Abstand x wird insbesondere entlang einer Mittelachse M der Differenzdruckmesszelle ermittelt. Beim Aufblähen der Messkammern 13, 15 treten Kerbspannungen zwischen der Messmembran und den Gegenkörpern auf, so dass die Messzelle bersten kann. Um dies zu vermeiden, sind an den Montageflächen 17, 19 Versteifungskörper 20, 22 mittels einer Glaslotschicht 24 drucktragend und druckdicht befestigt.

Hierdurch sind die Gegenkörper ausreichend versteift, um einem Aufblähen der Messkammern entgegenzuwirken. Die Versteifungskörper weisen Insbesondere Aluminiumnitrid oder Siliziumnitrid auf. In Richtung der Mittelachse M beträgt ihre Stärke einige Millimeter.

Durch die Versteifungskörper 30, 32 verläuft jeweils ein Druckkanal 23, 25, der mit den Messkammern 13, 15 kommuniziert, um letztere mittels einer Übertragungsflüssigkeit mit den Drücken p1, p2 beaufschlagen zu können.

Die Versteifungskörper 20, 22 sind über einen Kleber oder ein metallisches Lot an metallische Druckrohre 30, 32, insbesondere Kapillarrohre, angeschlossen, die ihrerseits mit einem (hier nicht gezeigten) hydraulischen Messwerk kommunizieren, über welches die zu messenden Drücke den Druckrohren zugeleitet werden. Die Druckrohre sind insbesondere wesentlich länger als ihr Durchmesser, so dass allenfalls einen vernachlässigbaren Beitrag zu einer effektiven Steifigkeit K beitragen, die definiert ist als K = 1/(dx/dp).

Wobei zur Ermittlung der Steifigkeit K beide Messkammern 13, 15 mit dem gleichen Druck p zu beaufschlagen sind.

Zum Treiben eines hier nicht dargestellten elektrischen Wandlers der Differenzdruckmesszelle 10 ist eine Schaltung 40 vorgesehen, welche über Kontaktstifte 42 mit Leitkleberpunkten an Kontaktfelder und Leiterbahnen 46 auf den Versteifungskörpern angeschlossen, welche ihrerseits wiederum mittels Leitkleberpunkten 48 Kontaktflächen der Differenzdruckmesszelle im Randbereich der Gegenkörper 12, 14 nahe den Montageflächen 17, 19 kontaktieren. Die Leiterbahnen und Kontaktflächen 46 auf den Versteifungskörpern 20, 22, weisen insbesondere eine metallische Beschichtung auf.

## Patentansprüche

1. Differenzdrucksensor (1), umfassend:
eine Differenzdruckmesszelle (10),
wobei die Differenzdruckmesszelle (10) einen Messzellenkörper mit einer ersten Messkammer (13) und einer zweiten Messkammer (15) in seinem Innern aufweist, wobei die Messkammern durch eine Messmembran (16) voneinander getrennt sind,
wobei der Messzellenkörper auf der Seite der ersten Messkammer eine der Messmembran abgewandte, erste ebene Montagefläche (17) aufweist,
wobei der Messzellenkörper auf der Seite der zweiten Messkammer eine der Messmembran abgewandte, zweite ebene Montagefläche (19) aufweist,
wobei die Messkammern jeweils eine Messkammeröffnung zur ersten bzw. zweiten ebenen Montagefläche aufweisen, über die Sie mit einem ersten bzw. zweiten Druck beaufschlagbar sind,
wobei die Messmembran (16) in Abhängigkeit von einer Differenz zwischen dem ersten Druck in der ersten Messkammer (13) und dem zweiten Druck in der zweiten Messkammer (15) elastisch verformbar ist,
wobei die Differenzdruckmesszelle einen Wandler aufweist, zum Bereitstellen eines von der Verformung der Messmembran abhängigen Signals,
einen ersten Versteifungskörper (20) mit einer ersten ebenen Versteifungsfläche, wobei durch den ersten Versteifungskörper ein erster Druckkanal verläuft, der in der ersten Versteifungsfläche mündet, und mit der ersten Messkammeröffnung kommuniziert, wobei die erste Versteifungsfläche mit der ersten Montagefläche (17) drucktragend verbunden ist,
einen zweiten Versteifungskörper (20) mit einer zweiten ebenen Versteifungsfläche, wobei durch den zweiten Versteifungskörper ein zweiter Druckkanal verläuft, der in der zweiten Versteifungsfläche mündet, und mit der zweiten Messkammeröffnung kommuniziert, wobei die zweite Versteifungsfläche mit der zweiten Montagefläche (19) drucktragend verbunden ist,
wobei eine Durchbiegung der ersten und zweiten Montagefläche aufgrund eine Druckbeaufschlagung der ersten und zweiten Messkammer durch die Versteifungskörper verringert wird auf nicht mehr als 25% insbesondere nicht mehr als 10%, vorzugsweise nicht mehr als 5%, weiter bevorzugt nicht mehr als 2% und besonders bevorzugt nicht mehr als 1% der Durchbiegung der Montageflächen einer Differenzdruckmesszelle gleichen Typs ohne Verbindung mit den Versteifungskörpern,
wobei insbesondere mindestens 50%, bevorzugt mindesten 70%, weiter bevorzugt mindestens 85% und besonders bevorzugt mindestens 95% einer effektiven Steifigkeit K= 1/(dx/dp) der durch die Differenzdruckmesszelle verbundenen Versteifungskörper, nur durch diese Verbindung der Versteifungskörper mit dem Messzellenkörper ohne zusätzliche Verbindungen zwischen den Versteifungskörpern in einem Nebenschluss gegeben ist, wobei x der Abstand zwischen der ersten Montagefläche und der zweiten Montageflächen ist, der die größte Druckabhängigkeit dx/dp aufweist,
wobei keine zusätzlichen, direkten mechanischen Verbindungen zwischen den Versteifungskörpern aufweist, die mehr als 5%, insbesondere mehr als 2% zur Steifigkeit K beitragen.

2. Differenzdrucksensor nach einem der vorhergehenden Ansprüche, wobei die Differenzdruckmesszelle Silizium aufweist.

3. Differenzdrucksensor nach einem der vorhergehenden Ansprüche, wobei die Versteifungskörper einen Keramischen Werkstoff aufweisen, insbesondere Aluminiumnitrid (AlN) und Siliziumnitrid (Si₃N₄), oder andere Nitridkeramiken, deren Ausdehnungskoeffizient nicht mehr als etwa 5 ppm/K, betragen.

4. Differenzdrucksensor nach einem der vorhergehenden Ansprüche, wobei die Versteifungskörper mittels eines Glaslots mit dem Messzellenkörper gefügt sind.

5. Differenzdrucksensor nach einem der vorhergehenden Ansprüche, wobei die Versteifungskörper jeweils eine Druckrohranschlussfläche aufweisen, die im wesentlichen senkrecht zur Versteifungsfläche verläuft, wobei sich der Druckkanal von der Druckrohranschlussfläche zur Versteifungsfläche erstreckt.

6. Differenzdrucksensor nach einem der vorhergehenden Ansprüche, wobei die Versteifungskörper jeweils mit einem Druckrohr verbunden sind, das seinerseits an ein hydraulisches Messwerk angeschlossen ist, wobei der Beitrag der Druckrohre zur effektiven Steifigkeit K weniger als 2% von K, insbesondere weniger als 1% von K und besonders bevorzugt weniger als 0,1% von K beträgt.

7. Differenzdrucksensor nach einem der vorhergehenden Ansprüche, wobei die Versteifungskörper mittels eines Glaslots, eines metallischen Lots oder Kleber mit den Druckrohren verbunden.

8. Differenzdrucksensor nach einem der vorhergehenden Ansprüche, wobei die Versteifungskörper zumindest abschnittsweise eine elektrisch leitende Beschichtung aufweisen, über welche ein elektrischer Wandler der Differenzdruckmesszelle mit einer elektronischen Schaltung verbunden ist.

## Claims

1. Differential pressure sensor (1), comprising:
a differential pressure measuring cell (10),
wherein the differential pressure measuring cell (10) has a measuring cell body with a first measuring chamber (13) and a second measuring chamber (15) in its interior, wherein the measuring chambers are separated from one another by a measuring diaphragm (16),
wherein, on the side of the first measuring chamber, the measuring cell body has a first planar mounting surface (17) facing away from the measuring diaphragm,
wherein, on the side of the second measuring chamber, the measuring cell body has a second planar mounting surface (19) facing away from the measuring diaphragm,
wherein the measuring chambers each feature a measuring chamber opening towards the first or, as the case may be, second planar mounting surface via which they can be exposed to a first or second pressure, respectively,
wherein the measuring diaphragm (16) can be deformed elastically depending on a difference between the first pressure in the first measuring chamber (13) and the second pressure in the second measuring chamber (15),
wherein the differential pressure measuring cell has a transducer for the provision of a signal that depends on the deformation of the measuring diaphragm,
a first stiffener body (20) with a first planar stiffening surface wherein a first pressure channel passes through the first stiffener body, wherein said channel enters into the first stiffening surface and communicates with the first measuring chamber opening, wherein the first stiffening surface is connected in a pressure-bearing manner to the first mounting surface (17),
a second stiffener body (20) with a second planar stiffening surface wherein a second pressure channel passes through the second stiffener body, wherein said channel enters into the second stiffening surface and communicates with the second measuring chamber opening, wherein the second stiffening surface is connected in a pressure-bearing manner to the second mounting surface (19),
wherein a deflection of the first and the second mounting surface due to a pressurization of the first and second measuring chamber by the stiffener bodies is reduced to not more than 25 %, particularly not more than 10 %, preferably not more than 5 %, more preferably not more than 2 % and particularly preferably not more than 1 % of the deflection of the mounting surfaces of a differential pressure measuring cell of the same type without a connection with the stiffener bodies,
wherein, in particular, at least 50 %, preferably at least 70 %, more preferably at least 85 % and particularly preferably 95 % of an effective rigidity K = 1/(dx/dp) of the stiffener bodies connected by the differential pressure measuring cell is obtained exclusively by this connection of the stiffener bodies with the measuring cell body without additional connections between the stiffener bodies in a parallel connection, wherein x is the distance between the first mounting surface and the second mounting surfaces that has the largest pressure dependence dx/dp,
wherein no additional, direct mechanical connections exist between the stiffener bodies that contribute more than 5 %, particularly more than 2 % to the rigidity K.

2. Differential pressure sensor as claimed in one of the previous claims, wherein the differential pressure measuring cell features silicon.

3. Differential pressure sensor as claimed in one of the previous claims, wherein the stiffener bodies feature a ceramic material, particularly aluminum nitride (AlN) and silicon nitride (Si₃N₄), or other nitride ceramics whose expansion coefficient is not more than approximately 5 ppm/K.

4. Differential pressure sensor as claimed in one of the previous claims, wherein the stiffener bodies are joined to the measuring cell body by a glass solder.

5. Differential pressure sensor as claimed in one of the previous claims, wherein the stiffener bodies each feature a pressure tube connection surface which is essentially perpendicular to the stiffening surface, wherein the pressure channel extends from the pressure tube connection surface to the stiffening surface.

6. Differential pressure sensor as claimed in one of the previous claims, wherein the stiffener bodies are each connected to a pressure tube which, in turn, is connected to a hydraulic measuring system, wherein the contribution of the pressure tubes to the effective rigidity K is less than 2 % of K, particularly less than 1 % of K and particularly preferably less than 0.1 % of K.

7. Differential pressure sensor as claimed in one of the previous claims, wherein the stiffener bodies are connected to the pressure tubes by a glass solder, a metal solder or an adhesive.

8. Differential pressure sensor as claimed in one of the previous claims, wherein the stiffener bodies feature at least in sections an electrically conductive coating via which an electrical transducer of the differential pressure measuring cell is connected to an electronic circuit.

## Revendications

1. Capteur de pression différentielle (1), comprenant :
une cellule de mesure de pression différentielle (10),
la cellule de mesure de pression différentielle (10) comportant un corps de cellule de mesure avec une première chambre de mesure (13) et une deuxième chambre de mesure (15) dans son intérieur, les chambres de mesure étant séparées l'une de l'autre par une membrane de mesure (16),
le corps de cellule de mesure du côté de la première chambre de mesure présentant une première surface de montage plane (17) située à l'opposé de la membrane de mesure,
le corps de cellule de mesure du côté de la deuxième chambre de mesure présentant une deuxième surface de montage plane (19) située à l'opposé de la membrane de mesure,
les chambres de mesure présentant chacune une ouverture de chambre de mesure vers respectivement la première et la deuxième surface de montage plane, par l'intermédiaire de laquelle elles peuvent être soumises à respectivement une première et une deuxième pression,
la membrane de mesure (16) pouvant être déformée de manière élastique en fonction d'une différence entre la première pression régnant dans la première chambre de mesure (13) et la deuxième pression régnant dans la deuxième chambre de mesure (15),
la cellule de mesure de pression différentielle comportant un convertisseur destiné à mettre à disposition un signal dépendant de la déformation de la membrane de mesure,
un premier corps raidisseur (20) avec une première surface de raidissement plane, un premier canal de pression passant à travers le premier corps raidisseur, lequel canal aboutit dans la première surface de raidissement, et communique avec la première ouverture de chambre de mesure, la première surface de raidissement étant reliée de façon à supporter la pression avec la première surface de montage (17),
un deuxième corps raidisseur (20) avec une deuxième surface de raidissement plane, un deuxième canal de pression passant à travers le deuxième corps raidisseur, lequel canal aboutit dans la deuxième surface de raidissement, et communique avec la deuxième ouverture de chambre de mesure, la deuxième surface de raidissement étant reliée de façon à supporter la pression avec la deuxième surface de montage (17),
une flexion de la première et de la deuxième surface de montage étant réduite en raison d'une mise en pression de la première et de la deuxième chambre de mesure par les corps raidisseurs à un maximum de 25 %, notamment un maximum de 10 %, de préférence un maximum de 5 %, encore de préférence un maximum de 2 % et particulièrement de préférence un maximum de 1 % de la flexion des surfaces de montage d'une cellule de mesure de pression différentielle de même type, sans liaison avec les corps raidisseurs,
notamment au moins 50 %, de préférence au moins 70 %, encore de préférence au moins 85 % et particulièrement de préférence au moins 95 % d'une rigidité effective K = 1/(dx/dp) des corps raidisseurs reliés par la cellule de mesure de pression différentielle étant obtenue dans une dérivation uniquement par cette liaison des corps raidisseurs avec la cellule de mesure de pression différentielle sans liaisons supplémentaires entre les corps raidisseurs, x étant la distance entre la première surface de montage et la deuxième surface de montage, qui présente la plus grande dépendance de pression dx/dp,
aucune liaison mécanique directe supplémentaire n'existant entre les corps raidisseurs, lesquels contribuent à plus de 5 %, notamment à plus de 2 % à la rigidité K.

2. Capteur de pression différentielle selon la revendication précédente, pour lequel la cellule de mesure de pression différentielle présente du silicium.

3. Capteur de pression différentielle selon l'une des revendications précédentes, pour lequel les corps raidisseurs présentent un matériau céramique, notamment du nitrure d'aluminium (AlN) et du nitrure de silicium (Si₃N₄) ou d'autres céramiques de nitrure, dont le coefficient de dilatation n'est pas supérieur à environ 5 ppm/K.

4. Capteur de pression différentielle selon l'une des revendications précédentes, pour lequel les corps raidisseurs sont assemblés avec le corps de cellule de mesure au moyen d'une soudure de verre.

5. Capteur de pression différentielle selon l'une des revendications précédentes, pour lequel les corps raidisseurs présentent chacun une surface de raccordement de tube de pression, qui s'étend pour l'essentiel perpendiculairement à la surface de raidissement, le canal de pression s'étendant de la surface de raccordement de tube de pression à la surface de raidissement.

6. Capteur de pression différentielle selon l'une des revendications précédentes, pour lequel les corps raidisseurs sont chacun reliés avec un tube de pression, qui est relié de son côté à un système de mesure hydraulique, la contribution des tubes de pression à la rigidité effective K étant inférieure à 2 % de K, notamment inférieure à 1 % de K et particulièrement de préférence inférieure à 0,1 % de K.

7. Capteur de pression différentielle selon l'une des revendications précédentes, pour lequel les corps raidisseurs sont reliés avec les tubes de pression au moyen d'une soudure de verre, d'une soudure métallique ou d'une colle.

8. Capteur de pression différentielle selon l'une des revendications précédentes, pour lequel les corps raidisseurs présentent au moins partiellement un revêtement électroconducteur, par l'intermédiaire duquel un convertisseur électrique de la cellule de mesure de pression différentielle est relié avec un circuit électronique.
